(19) **Europäisches Patentamt / European Patent Office / Office européen des brevets**

(11) **EP 2 966 562 A1**

(12) # EUROPEAN PATENT APPLICATION

(43) Date of publication:
**13.01.2016 Bulletin 2016/02**

(51) Int Cl.:
**G06F 3/06** (2006.01)

(21) Application number: **14196421.3**

(22) Date of filing: **04.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2014 US 201462022354 P**

(71) Applicant: **Nexenta Systems, Inc.**
**Santa Clara, CA 95050 (US)**

(72) Inventor: **Aizman, Alexander**
**Mountain View, CA California 94041 (US)**

(74) Representative: **Pisani, Diana Jean et al**
**Ropes & Gray International LLP**
**60 Ludgate Hill**
**London EC4M 7AW (GB)**

(54) **Method to optimize inline i/o processing in tiered distributed storage systems**

(57) The present disclosure provides new methods and systems for input/output processing workflows in distributed multi-tiered distributed storage systems (tDSS). One implementation relates to a method of writing data to a heterogeneous multi-tiered Distributed Storage System (tDSS). A class of storage tier for the first copy or the first subset of coded slices of data is selected using operating modes for the tiers, where the operating mode for a tier instance depends in part on statistical measures of operating parameters for that tier. Lower tiers are selected to store additional replicas of data using operating modes for those lower tiers. Another implementation relates to a method of reading data from a heterogeneous multi-tiered Distributed Storage System (tDSS). To execute the read, tiers that store a copy of the data are selected using operating modes for the tiers, where the operating mode for a tier instance depends in part on statistical measures of operating parameters for that tier.

FIG. 3A

FIG. 3B

**Description**

**BACKGROUND**

*Technical Field*

The present disclosure relates to distributed tiered data storage systems, and specifically to optimizing and load-balancing user and application-generated I/O workloads in multi-tiered distributed-storage environments.

*Description of the Background Art*

Typical distributed storage systems (DSS) comprise multiple storage servers configured to provide increased capacity, input/output (I/O) performance (i.e. write/read performance), fault tolerance and improved data availability via multiple copies of data stored on different storage servers/tiers. The DSS servers used to store user and application data are often clustered and combined in one or more tiers of identical servers. Often, those identical servers are based on commodity hardware and local disk drives.

Storage provided by DSS is utilized by applications including filesystems, databases, object storage systems. Each of those applications provides a certain application-specific service to upper layers and users (for instance, a filesystem provides and facilitates file storage and file management) while utilizing distributed block, file and/or object-level services provided by the underlying storage servers and tiers of servers of the DSS.

The present disclosure relates to heterogeneous distributed multi-tiered storage systems, methods and architectures. Conventionally, in a multi-tiered system with storage tiers denoted T1, T2, ... Tn the first (often called "primary") tier T1 directly faces users and applications and provides the best I/O performance, while the last tier Tn provides abundant capacity to store less (or least) critical and/or less frequently (or recently) accessed data, including long-term backups and archives.

In a given multi-tiered storage system (T1, ..., Tn), for any two "neighboring" tiers $T_i$ and $T_{i+1}$ (1 <= i < n), I/O performance of the Ti is typically better than I/O performance of its lower tier neighbor $T_{i+1}$. Typical performance metrics include maximum IOPS, throughput and average latency measured on a per-tier basis for a given application-generated or synthetic workload. Simultaneously, available capacity generally increases from $T_i$ to $T_{i+1}$, or is expected to increase.

It is also a widely accepted in the industry that lower tiers are generally less expensive on a per-terabyte of the provided capacity.

Lower tiers of a multi-tiered DSS are typically used to provide for data availability, by storing additional copies of data or additional redundant erasure encoded slices (with XOR-based parity being a special case of the latter). Those redundant copies and slices are conventionally generated outside the main I/O processing path (and often, by a separate storage software). For instance, in the write-processing data path:

write(data) request by application => N copies of data stored in the DSS
DSS will conventionally store all N copies on a single tier designated for the writing application (e.g., primary tier T1 in case of mission-critical business applications), while additional copies will be generated outside this data processing path. Alternatively, conventional DSS will, at best, provide redundancy via RAID levels or erasure encoded schemas implemented over multiple servers of the same storage tier.

Similarly, when reading data, a typical I/O processing sequence includes reading data from one or more servers of a given selected storage tier. Conventional distributed storage systems do not employ lower tiers to perform part of the normal inline (as opposed to offline, background, and separate from the main application-driven data path) I/O processing. Reading of extra copies stored on other storage tiers is typically executed offline and outside the normal ("fast path") I/O processing logic, the corresponding ("slow path") scenarios including: error processing, data recovery, storage/capacity rebalancing, as well as offline compression, encryption, erasure encoding, and deduplication.

SUMMARY

The present disclosure provides methods that dynamically and optimally leverage all storage tiers to execute I/O operations, while at the same time conforming to user and application requirements. The disclosure presents a system and method to utilize heterogeneous storage tiers, both persistent and non-persistent, with their per-tier specific unavoidable limitations and the corresponding tradeoffs including for example: best I/O latency for limited capacity and a relatively high $/GB price, best sequential throughput vs. not so good random small-block IOPS, and so on. Further, in order to satisfy user and application requirements, the disclosure integrates implicitly or explicitly defined service-level agreements (SLA) directly into I/O datapath processing. Further, the disclosure provides for dynamic at-runtime adjustments in the I/O pipeline when processing I/O requests. Finally, the disclosure provides at-runtime adaptive combination of I/O performance and availability - the latter, via storing redundant copies and/or redundant coded slices of data on the lower tiers (when writing), and retrieving the data from one of the lower tiers (when reading).

One implementation relates to a method of writing data to a heterogeneous multi-tiered Distributed Storage System (tDSS). A class of storage tier for the first copy or the first subset of coded slices of data is selected using operating modes for the tiers, where the operating mode for a tier instance depends in part on statistical measures of operating parameters for that tier. Lower tiers are then selected to store additional replicas of data using operating modes for those lower tiers.

Another implementation relates to a method of reading data from a heterogeneous multi-tiered Distributed Storage System (tDSS). To execute the read, tiers that store a copy of the data are selected using operating modes for the tiers, where the operating mode for a tier instance depends in part on statistical measures of operating parameters for that tier.

Other implementations, aspects, and features are also disclosed.

## BRIEF DESCRIPTION OF THE DRAWINGS

FIG. 1 depicts conventional single-tiered distributed storage system.
FIG. 2 depicts an exemplary multi-tiered distributed storage system.
FIG. 3A depicts two storage tiers that comprise, respectively, RAM and disk storage of the shared storage servers.
FIG. 3B illustrates read and write processing delegation from an upper tier to its lower tier "neighbor".
FIG. 4 is a sequence diagram illustrating I/O processing enhancements for the write datapath, in accordance with the present disclosure.
FIG. 5 is a sequence diagram illustrating I/O processing enhancements for the read datapath, in accordance with the present disclosure.
FIG. 6 is a sequence diagram illustrating erasure encoding techniques for the write datapath, in accordance with the present disclosure.
FIG. 7 is a flow chart of an exemplary method of performing a data write request.
FIG. 8 is a flow chart of an exemplary method of performing a data read request.

## DETAILED DESCRIPTION

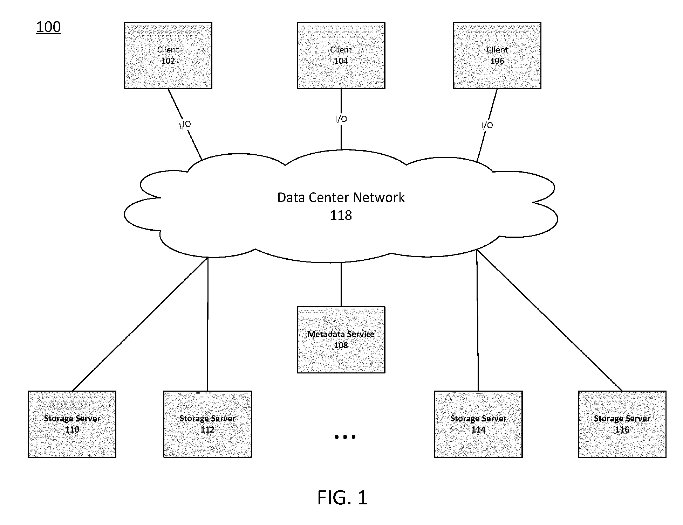

FIG. 1 shows a conventional single-tier multi-server distributed storage system 100 in a Data Center. The system 100 provides storage services to remote clients 102, 104, and 106 (that read and write data from/to the storage servers 110, 112, 114, and 116 via a data center network 118). Metadata Service 108 in system 100 illustrates the common metadata "glue" that facilitates distribution (aka "dispersion") of client data across multiple storage servers - transparently for the clients 102, 104, and 106. Thus, Metadata Service 108 on the FIG. 1 denotes a variety of known in the art implementations, from centralized metadata systems such as HDFS and pNFS to scalable Dynamo derivatives (based on the classic 2007 paper "Dynamo: Amazon's Highly Available Key-value Store"), such as OpenStack Swift and Red Hat Ceph.

As used herein, the terms "storage tiers" and "tiered storage" describe multi-server heterogeneous storage environments, whereby each tier consists of one or more storage servers, for example, storage servers 110, 112, 114, and 116, and provides for a specific set of requirements with respect to price, performance, capacity and function. For instance, a multi-tiered distributed storage system (tDSS) may include the following 4 tiers:

1) Tier 1 also known as a "service tier" that immediately faces clients and typically comprises storage servers that deploy the fastest and the most expensive storage media for mission critical applications;
2) Tier 2 for non-mission critical applications;
3) Tier 3 for hourly and daily backups; and
4) Tier 4 for monthly and yearly backups, long term archive, data-at-rest, etc. The definitions above and their close variations (there may be of course fewer or many more than the 4 tiers described above) are often used in modern data centers, to support a full variety of applications and associated storage services.

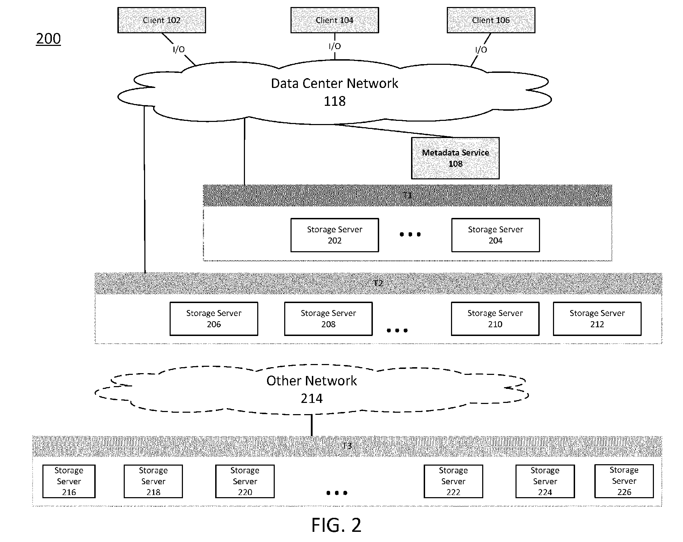

FIG. 2, for instance, shows a 3-tiered tDSS 200, whereby the first two tiers (e.g., storage servers 202 and 204 of Tier 1 and storage servers 206, 208, 210, and 212 of Tier 2) comprise the Data Center's local servers, while servers 216, 218, 220, 222, 224, and 226 of the T3 are located outside the Data Center (e.g., on the Other Network 214) and may be geographically remote, to cover for the well-known "blast radius" risk and to support long-term backup and disaster recovery requirements.

In another 4-tier implementation targeted specifically for the high-performance computing (HPC) space, tDSS tiers include:

1) Tier 1 that comprises storage servers providing volatile DDR4 based RAM;
2) Tier 2 that employs PCIe 3.x attached SSD based storage of the (same) T1 servers, to store data persistently;
3) Tier 3 that comprises DDR3 (volatile) memories of multiple storage servers; and
4) Tier 4 that is based on the SAS attached SSDs of the T3 servers.

Note that T1 and T3 in this implementation are non-persistent, backed-up (as far as user/application data is concerned) by their persistent lower-tier "neighbors" T2 and T4, respectively. This implementation does not trade the data persistency in rare cases (such as a sudden power-cycle with no UPS backup) - for I/O performance in all cases, as there are known techniques to provide a required level of durability, atomicity and integrity via, for instance, asynchronous and synchronous replication and data de-staging to lower tiers, and of course the already mentioned UPS.

Storage tier on top of DRAM, backed up by asynchronous de-staging to its neighboring lower tier, is part of a preferred implementation of the present disclosure, with a 4-tier example described above. Those skilled in the art will appreciate another novelty: the present disclosure does not restrict storage tiers to comprise storage servers entirely, with all their associated (server-own) CPU, memory and local storage resources.

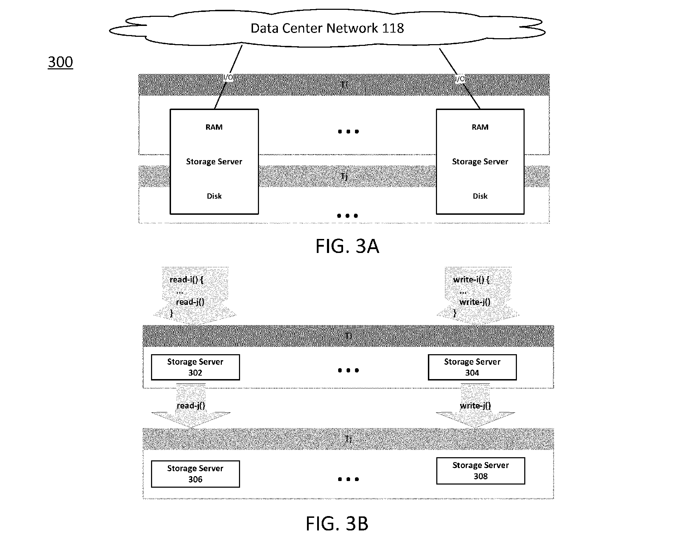

FIG. 3A, for instance, depicts a system 300 including two tDSS tiers, Ti and Tj, whereby tier Ti comprises RAM of physical or virtual storage servers, and tier Tj comprises disk storage of the same physical or virtual servers. In the implementations, the number of copies of data and/or the corresponding erasure encoding (or simple XOR parity based) redundancy is substantially greater for the non-persistent tiers, to alleviate the risks of sudden power-cycle with no UPS backup, and similar. The failure-domains (aka, fault domains) factor is also taken into account, for the same exact reason.

Note that storing data in RAM should not be confused with the legacy art of data and metadata caching - the latter is probabilistic, with cache eviction controlled via last-recently-used, most-frequently-used and similar known algorithms and their adaptive combinations. This disclosure in at least some of its implementation employs storage server memory as a distributed storage tier, whereby locations and properties of this storage (including its non-persistent nature) is described in the tDSS own metadata controlled via the Metadata Service 108 (FIG. 2). RAM-based tier has of course the two most important differentiating properties - limited capacity and non-persistence. RAM-based tiers, on the other hand, provide an unmatched I/O latency that is leveraged and utilized in the implementations of the present disclosure.

FIG. 3B illustrates read and write processing of the system 300 being delegated from an upper tier Ti (including storage severs 302 and 304) to its neighboring lower tier Tj (including storage servers 306 and 308). One common rationale for this delegation is two-fold: overloading of the Ti precisely at the time when it must execute I/O request, and availability of resources (and in case of read request - replicas) - on the Tj. The present enclosure describes specific novel enhancements to the I/O datapath in the distributed storage systems. Those enhancements can be applied on the "northbound" boundary between tDSS and its clients, and/or inside the tDSS itself. FIG. 3B effectively applies the present disclosure on the boundary between Ti and Tj, to optimize Ti's own I/O processing.

*Class of Storage*

The goal of arranging storage in multiple service tiers is to organize storage servers with similar characteristics on a per-tier basis, and to optimally use those storage servers to meet business requirements. It is only fitting therefore to associate a specific Class of Storage (CoS) labels, or a range thereof, with each tier.

Class of Storage (CoS) reflects, directly or indirectly, one or more measureable properties of the storage servers, such as for instance, the type of underlying storage media (e.g., SSD, SATA), type of server ⇔ storage-disks interconnect (e.g., DAS over PCIe 3.0, iSCSI over 1 GE), performance of the storage server and its free capacity.

More broadly, CoS may include storage server vendor and model, capacity, locality (e.g., Data Center local or remote), I/O latency and I/O throughput under a variety of workloads, number of CPU cores, size of RAM. For the virtual servers, the CoS could include the type of the hypervisor and hypervisor-allocated resources.

Ultimately, CoS abstraction allows to formalize de-facto existing convention that, as in the above example, (primary) Tier 1 is higher than Tier 2, and Tier 4 is lower than Tier 3. This and similar references to the ordering of tiers elsewhere in the present application refer to the CoS enumeration and ordering as discussed above.

Class of Storage associated with (or assigned to) n storage tiers numbered from 1 to n is henceforth denoted as $CoS_i$, where $1 <= i <= n$. For the purposes of this disclosure, it will be postulated that all storage servers in a given storage tier Ti share the same CoS properties, the same CoS label.

In production implementations, each storage tier will often (but not always) consist of co-located (same zone, same region, same network) and identical (hardware or virtualized-resources wise) storage servers, which would automatically make the associated CoS labels identical as well. Those skilled in the art will appreciate that this disclosure does not require (and does not rely upon) storage servers being physically identical. All servers of any given tDSS tier share the same CoS, and therefore are treated equally as far as I/O processing mechanisms and methods disclosed herein.

Implementations of this disclosure include tDSS with both persistent and non-persistent (volatile) tiers. For instance, one implementation includes a 3-tier storage system whereby the tiers T1 and T2 are RAM based, and the tier T3 is SSD based. In the implementation, the corresponding $CoS_1$ and $CoS_2$ labels reflect that fact that T1 and T2 are not persistent, which in turn is used by the disclosed I/O processing logic to optimize performance, on one hand, and provide availability of the user/application data, on another.

Further, the present disclosure does not require all resources of a given physical or virtual storage server to be fully allocated for a given storage tier. For instance, a given physical or virtual (VM-based) storage server may provide its random access memory to one storage tier, while its directly attached disks to another storage tier. Those skilled in the art will appreciate that, via the CoS labels assigned to those tiers, I/O processing disclosed herein takes advantage of the storage tier's own I/O latency (superior for DDR-based memory compared to other types of media) as well as inter-tier I/O latency. In the tDSS, n tiers may be implemented using a smaller number k (k < n) of storage server models (types).

One implementation includes a 4-tier tDSS that is built using just two types of storage servers: type A (SSD-based, expensive, fast) and type B (SATA-based, inexpensive, slow). In this implementation, T1 effectively combines RAM of all type A servers, T2 combines SSDs of all type A servers, T3 and T4 combine respectively RAM and SATA drives of the type B storage servers. Notice that inter-tier I/O operations between tiers T1, T2 (and respectively T3, T4) in this implementation will have performance characteristics of local reads and writes (as they will be local reads and, respectively, writes).

Thus, it must be apparent to one of ordinary skill in the art that storage tiers referenced in this disclosure are in fact (logical) abstractions that may take many forms and be implemented in a variety of ways. In that sense, tDSS is an ordered set of logical tiers T1, ..., Tn, whereby both the upper tiers (including T1) and the lower tiers (including Tn) collaborate to provide distributed redundant storage, with each tier Ti (1 <= i <= n) having a certain Class of Storage label. Each CoS in turn reflects the tier's characteristics in terms of its persistence, underlying storage media, type of (server ⇔ storage) interconnect, the tier's locality as far as clients and applications, and/or I/O performance under a variety of application-generated workloads.

In all cases, as per the present disclosure, tDSS tiers - volatile and persistent, fast and slow, local and remote, relatively small in size and counting petabytes of usable capacity - all tDSS tiers collaborate to provide optimal and configurable combination of I/O performance and data availability.

*Application SLAs and I/O processing in the* tDSS

Heterogeneous multi-Tiered Distributed Storage System (tDSS):

1) maps application-level Service Level Agreement (SLA) labels associated with the application generated I/O requests to the underlying storage tiers;
2) allows for placement of data copies on specific storage tiers, in accordance to pre-configured mappings of those application-level SLA labels to the underlying CoS of the storage tiers;
3) allows for biasing reads and writes between storage tiers; and
4) supports additional or alternative I/O processing stages, such as data checksumming, compression, encryption, and deduplication, to protect and transform application data on a per Class of Storage label basis.

In summary, tDSS allows to combine different storage hardware and software within a unified multi-tiered distributed storage system, to optimally and adaptively balance I/O performance (via upper storage tiers) and availability (via lower storage tiers). Application I/O requests, implicitly or explicitly associated with application or user level SLAs are matched to the underlying storage tiers (in the order from coarse- to fine-grained control):

per user and/or per application;
per dataset;
per I/O request;
per copy-of-the-data; and finally
per plurality of erasure encoded slices. Read and write processing is done according to the corresponding per-storage tier CoS labels as explained herein.

Service-level agreements (SLAs) can broadly be defined as the portion of storage resources (capacity, performance) and associated services (redundancy, availability in presence of failures) delivered to the user or application based on the pre-defined policies associated with the latter. There's currently no standard SLA definition in storage industry, as well as no de facto accepted standard on how to propagate an SLA from users and applications through storage protocols and management systems to storage arrays. Those skilled in the art will appreciate therefore, that user and application SLAs take many forms and are implemented in multiple different custom ways.

In one implementation, for instance, SLAs are simply numbered from the highest (1) to the lowest (n) where n is the number of storage tiers, which provides for an immediate mapping to the underlying n storage tiers T1, ... Tn via the corresponding CoS labels $CoS_1$, ... $CoS_n$.

Another implementation provides for SLAs formulated in terms of the end-to-end I/O latency that must be within a given range for 99 percentile of I/O requests, with data availability withstanding a given set of exceptional events. In this implementation, the corresponding SLA => CoS mapping takes into account detailed performance, capacity and the capability of the underlying storage servers, both provisioned (e.g., type of local storage) and runtime (e.g., current utilization of CPU, memory and local storage).

In the exemplary implementation SLA contains two parts: administrative or "static" and probabilistic or "dynamic". The static part of the SLA, denoted henceforth as SLA-s, specifies tDSS storage resources and storage services that are "statically" required - that is, do not depend on runtime conditions. For instance, storage administrator may want to "statically" require that application A always uses a storage tier that is based on SSDs in at least 5 copies in two different failure domains, while application B must store its content on rotating hard drives in at least 3 copies. Those SLA requirements do not necessarily need to be formulated as MUST-haves - some of them may be (SHOULD or MAY) desirable and, when not met, ignored as far as subsequent I/O processing. However, what is important is that SLA-s by definition does not depend on (and is not formulated in terms of) runtime load, utilization and/or performance of the tDSS or its tiers or its storage servers at any given point in time.

On the other hand, the dynamic part of the service-level agreement (denoted henceforth as SLA-d) provides for adaptive load balancing within the SLA-s defined static boundaries for a given user or application, and does specify parameters in terms of storage performance, latency, IOPS, throughput, and overall storage utilization. The latter does constantly change at runtime: SLA-d is used to control and influence this change. To give an example, SLA-d may include a "98th percentile" requirement, on read and write latencies to remain under 0.1 ms for reads and under 0.3ms - for writes for, respectively, 98% of all I/O requests by a given application.

Even though service-level agreements remain today with no widely accepted definition (albeit with numerous custom implementations throughout the storage industry), the two SLA parts outlined above - administrative (static) and probabilistic (dynamic, depending on the runtime conditions) - do exist and do complement each other. The present disclosure provides a novel and consistent way to handle both parts independently of their custom parameters that are often tailored to specific applications and custom management policies. This, plus the capability to adaptively balance the I/O across all storage tiers will allow system administrators and IT managers to reconcile tradeoffs (e.g., storage capacity vs. performance vs. and cost), and at the same time quickly and optimally react to changing requirements as far as scale (new applications, additional users, additional tiers and/or storage servers) and user SLAs.

*I/O Processing Workflows*

The present invention provides extremely flexible and highly configurable system-defined enhancements for inline processing of user- and application-generated I/O workloads in multi-tiered distributed environments. The term "inline" is used here to clearly define the field (illustrated earlier on the FIG. 1 and FIG. 2) and to differentiate from the "offline" art, such as background migration and offline deduplication. The differentiation is simple: inline I/O requests originate outside storage servers, by the remote clients that use tDSS storage services: block, file, and/or object level. Offline I/O workloads, on the other hand, originate inside the storage servers themselves, to perform a variety of storage-specific "house-keeping" tasks including, again, offline storage deduplication and compression, storage migration (see, for instance, Hierarchical Storage Management, or HSM), and defragmentation.

To optimize inline I/O processing, implementations of the present application take into account pre-defined policies (that in turn align to per-user, per-application service-level agreements) and tDSS (that is, its tiers and servers) parameters, including runtime space utilization, usage statistics, I/O performance and other measurable parameters. In an exemplary implementation, conforming with user and application SLAs (its both SLA-s and SLA-d part) is achieved using COST() and MATCH() functions as described below.

Furthermore, in accordance with an embodiment of the invention, a "minimal CoS" label may be used. The minimal CoS label may be, optionally, assigned to each I/O request. The minimal CoS label may be used to prevent dispatch of the I/O request to any tier whose CoS is lower that the specified minimal CoS. (As stated above in the 4-tiers examples, T1 would be considered the highest or primary tier, and T4 would be considered the lowest.) For instance, if a tier becomes overloaded, the data destined for that tier may be placed on a lower tier if the lower tier is at or above the minimal CoS. If a tier with the CoS at or above the minimal CoS cannot be found, the request is not dispatched, and the upper layer is notified that the I/O request cannot be carried out with the requested range of CoS at present. This technique of matching I/O requests to tDSS tiers may be referred to as a "best-effort matching" method.

In accordance with an implementation of the application, under the best-effort matching method, I/O requests labeled with an SLA label (and optionally, a minimal CoS label) that do not have their mapping to tDSS classes of storage configured, as well as I/O requests with no SLA label specified, may be assumed to be labeled with a default CoS label such that the best effort match may be applied. The default CoS label may be configured using, for example, a Storage Management System (SMS) to specify the default configuration while at the same time providing the capability to override the default configuration to further optimize tDSS resource utilization and, simultaneously, I/O performance. The default configuration may be overridden on a per application basis, per user basis, per stored object or file basis, per I/O request basis.

*System Description*

As discussed above, tDSS may be organized as a collection of classes of storage, each including a collection of storage servers organized in one or more storage tiers. Each storage tier Tj is assigned CoSj, and all storage servers of the tier Tj share the same CoSj label. Specific data/metadata types may be mapped to specified classes of storage of the underlying storage servers. Such mapping and other required configuration may be done in a variety of conventional ways. For instance, a dedicated Storage Management System (SMS) may be used to allow system and storage administrators configure all, or a subset of, the required configuration variables.

Note that the system may automatically assign default values to the threshold and weighting parameters, and therefore a storage management system (SMS) driven configuration may be optional. The SMS may also vary the parameters dynamically in order to achieve the desired ranges or component utilization. A particular implementation of the system described in the present application is not required to use all the parameters described above, or may use additional parameters that suitably describe the specific storage tiers and subsystems.

*Method Description: MATCH() and COST()*

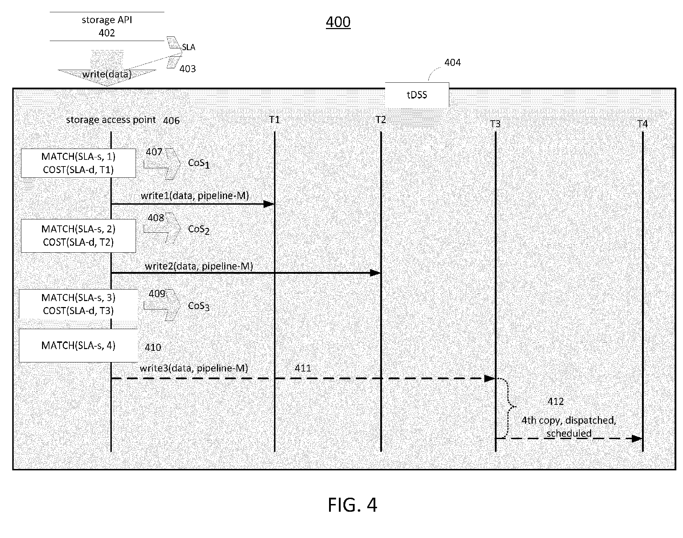

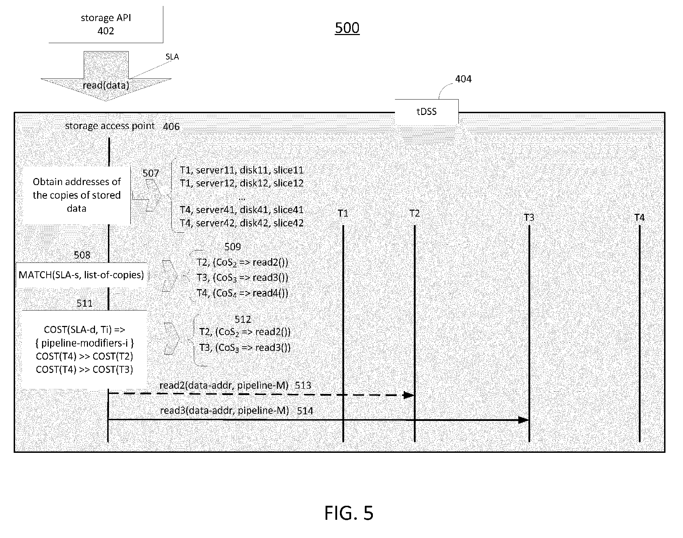

The present application discloses two new functions for the I/O subsystem for a tiered distributed storage system. These functions are: MATCH() function that selects storage tiers for performing I/O request (see FIG. 4, FIG. 5), and COST() function that in part further narrows down the selected subset by computing the "cost" of executing I/O request on a per-tier, per-server basis (see FIG. 4, FIG. 5).

The MATCH() and COST() functions in combination serve the ultimate purpose of implementing user SLA explicitly or implicitly associated with the I/O, while at the same time optimizing I/O processing and data availability. Both MATCH() and COST() functions operate inline, as an integral part of the I/O processing datapath. For each I/O request MATCH() function:

- maps associated SLA into class of storage (CoS) labels, and
- selects a subset of class of storage tiers of the tDSS that satisfy the SLA.

Note again that in the exemplary implementation both MATCH() and COST() operate inline, as part of the I/O processing datapath. COST() function:

- further narrows down the set of MATCH-ing destination tiers based on the continuously collected and updated runtime statistics, and
- generates parameters for the per-CoS read() and write() implementations to optimize I/O performance by, in part, adapting at runtime their respective I/O pipelines, as far as specific pipeline stages described herein.

Implementations of this application support a broad variety of both MATCH() and COST() functions, with multiple examples detailed further in this disclosure. MATCH() function will, for instance, filter out those storage tiers where per gigabyte cost of storage is higher than the one provided with a given instance of a service-level agreement. Within the at least two remaining tiers, the COST() function will answer the questions of the type: which of the two storage tiers to use for the SLA requiring 98th percentile of I/O latency to remain under 1 ms, given that storage servers from the first tier provide 100K IOPS and are currently 90% utilized, while servers from another tier provide 1200 IOPS and are currently 15% utilized (which also would typically indicate that at least some of the "other tier" servers have currently empty queues of outstanding I/Os and are therefore fully available).

Similar to mapping of I/O requests to classes of storage with CoS labels in I/O requests, an implementation of the present application assigns the responsibility of maintaining a mapping of I/O request labels to additional or alternative processing stages to the upper layers of software mentioned earlier. This allows tiered distributed storage system to avoid maintaining extra states and to concentrate on carrying out the requested processing in the most efficient fashion.

FIG. 4 is an exemplary sequence diagram 400 for storing 4 copies of data when performing a data write I/O request. In the implementations, storage API 402 (block, file or object-level) is used by the (reading and writing) tDSS clients 404 (such as applications and users including clients 102, 104, and 106) to access distributed storage. Further, storage access point 406, along with the underlying storage tiers T1, T2, T3, and T4, is provided by the tDSS 404 itself and can be represented, for instance, as an HTTP/HTTPS address - for object storage, hostname and name of the file share - for file access, or a combination of target WWN or IQN and LUN - for block storage. Those skilled in the art will note that concrete realization of storage access points will be defined by the type of storage service (block, file, object) and access protocols that clients use to read and write data.

Initially, data and its directly or indirectly associated SLA descriptor is received via tDSS 404 storage access point 406 (FIG. 4), via the I/O request denoted as write(data) 403. For each of the requested 4 copies of data, MATCH() function selects the corresponding CoS tier, as well as the CoS-associated concrete writing mechanism - to write this copy. Those skilled in the art will appreciate that per-CoS specific implementation of the write() method provides for optimizations across the entire I/O pipeline, from allocating unused blocks to I/O scheduling and ultimately writing to physical media. In an exemplary implementation, the MATCH() function takes the following arguments:

> i) SLA associated with the I/O request, or more exactly, its SLA-s part that does not depend on runtime utilization and other statistics
> ii) a request type (read, write);
> iii) number or index of the copy (1, 2, 3, ...);

FIG. 4 illustrates I/O processing enhancements for the write datapath, in accordance with the present disclosure. The result of MATCH-ing I/O request to the storage tiers T1 (407), T2 (408), T3 (409), and T4 (410) takes into account the number (or index) of the copy of data: the first copy is immediately (and synchronously) stored in the primary tier T1, while the last 4th copy is scheduled to be stored in the lowest tier T4 via write request "outsourced" or delegated to its neighboring 3rd tier T3'(411, 412). Further, each subsequent copy of the data is stored using specific writing method that is associated with the corresponding CoS label and is optimized and tuned with respect to the destination storage tier.

In addition to the MATCH() function that narrows down the set of SLA-matching tiers and translates services-level agreements to (storage-level) CoS labels, the disclosure provides COST() function that takes into account utilization and performance statistics described herein, to optimize I/O processing at runtime. COST() function computes a descriptor that includes "pipeline-modifiers"; the latter is then propagated to the read() and write() processing routines to optimize their respective I/O processing pipeline stages - which is exactly why in the implementations the COST() function is invoked even in those cases when there's a single matching (resulting from the MATCH() function) destination storage tier.

In an exemplary implementation, the COST() function takes the following arguments:

> i) Dynamic part of the SLA denoted as SLA-d herein; the associated SLA parameters may include storage performance, latency, IOPS, throughput, and overall storage utilization
> ii) a request type (read, write);
> iii) size of the data
> iv) destination storage tiers (resulted from the previous MATCH-ing);
> iv) a reference to the tDSS 404 monitoring facility that maintains various operating statistics for the tDSS 404 and its storage tiers T1, T2, T3, and T4;
> v) a reference to the tDSS 404 configuration repository (perhaps SMS) that contains the low and high thresholds for the various classes of storage.

Further, as stated above, the COST function computes and returns pipeline-modifiers - a name/value list of properties that, in combination, provide an implementation-specific hints on executing the current I/O request against the selected (matching, computed by the MATCH() function) tiers and their respective storage servers. In its most reduced form, pipeline-modifiers is empty whereby the COST() function simply returns a boolean true or false, indicating either a "green light" to execute the current I/O, or the associated prohibitive cost as far as the selected storage tier.

Further, each instance of computed pipeline-modifiers references the specific class of storage (further denoted as pipeline-modifiers->CoS) for which those pipeline modifying parameters were computed. For example, given two matching tDSS tiers one of which is SSD-based and the other HDD-based and given the fact that SSDs are typically order(s) of magnitude more expensive on a per-GB basis, pipeline-modifiers could look as follows:

> pipeline_modifiers_ssd = {CoS-ssd, use_compression = true};
> pipeline_modifiers_hdd = {CoS-hdd, use_compression = false};

In other words, the I/O pipeline will either include the data compression stage or not, depending on the targeted storage tier. The same of course applies to the rest I/O pipeline stages where the corresponding at-runtime modifications are warranted based on the computed cost (result of the COST() function, which in turn is based on the collected runtime statistics described herein) and does conform to the user and application service-level agreements.

Those skilled in the art will note that, partly due to the open definition of service-level agreements, it is possible and sometimes may be feasible to require, for instance, inline compression via static part of the SLA. The present disclosure does support the corresponding implementations - those are the cases where the set of COST-modifiable aspects of the specific I/O pipelines are narrowed down (to exclude, for instance, compression). In the common case, though, whether the data is compressed, deduplicated and how it is dispersed across storage servers must be irrelevant for the user as long as the system provides for a given business requirements including I/O performance and data availability at or below a given cost.

In the implementations, I/O pipeline modifiers (denoted as 'pipeline-modifiers' herein) is a descriptor that includes an associated per-tier CoS and a list of names and values that provide information directly into the class of storage specific read() and write() implementations with respect to data checksumming, compression, encryption, deduplication, distribution (dispersion), read caching and writeback caching. To give another example, I/O pipeline modifiers could include the following hint on executing the deduplication stage (that is, performing inline deduplication):

```
use_deduplication = CPU-utilization < threshold1
&&
size-of-deduplication index < threshold2;
```

To compute pipeline-modifiers, the present disclosure builds upon existing art of monitoring, evaluating and balancing I/O performance. This includes both direct monitoring often done via an external storage management system (SMS), and feedback-based monitoring, whereby the storage servers themselves provide their respective load and utilization, either directly to the servers implementing storage access points (FIG. 4) and facing the clients (those skilled in the art will note that those access servers typically implement all or a part of the Metadata Service), or indirectly, via the SMS.

Implementations of the present disclosure integrate MATCH() and COST() operation with the conventional I/O processing mechanisms for distributed storage. FIG. 4 includes the capability to write data copies differently and optimally - for instance, the 1 st and 2nd copies are written synchronously, the 3rd - asynchronously (411), and finally the 4th copy is scheduled to be written from T3 to T4 (by the tier T3 itself, 412). Further, the writing methods write1, write2, write3, write4 implement custom policies associated with the corresponding CoS labels. The latter allows customizing (that is, adjusting at runtime), or altogether skipping some of the conventional I/O processing stages, including compression, encryption and deduplication.

In particular, FIG. 4 shows the following steps. First, user data and associated with it service-level descriptor are received via a write() request (shown as 'write(data)'), forwarded to the tDSS 404 via a conventional or custom storage API 402, for instance iSCSI and FC - for block, NFS and CIFS - for file, Amazon S3 and OpenStack Swift - for object. Next, prior to executing tDSS-specific write() operation, a MATCH() function is called in accordance with the present disclosure. Note that the MATCH() function, as one of its arguments, receives the number (or index) of the copy - for the very first copy of data there's typically an incentive to store the data as fast as possible, and return back to the caller (as fast as possible).

Next, the MATCH() function maps this I/O request to the upper tier T1 (407), and the subsequent COST() function computes the current pipeline-modifiers estimating the cost for the T1 to execute this I/O request. Further, the remaining steps to store copies of user data are shown, whereby the first two copies are stored synchronously and the remaining 2 copies stored asynchronously, which in turn is defined by the corresponding classes of storage (e.g., $CoS_1$ => synchronous, $CoS_2$ => synchronous, $CoS_3$ => asynchronous, $CoS_4$ => asynchronous) or the implementations of the corresponding per-CoS write1(), write2(), write3(), write4() routines. In one implementation, a single common logic to write data onto a storage tier is cosmetically modified to execute the actual write operation in a separate thread or process, and immediately return to the caller upon triggering this thread (or process). The corresponding implementation is then named write3() and connected to the class of storage associated with tier T3, as illustrated on FIG. 4.

FIG. 5 is a sequence diagram 500 illustrating I/O processing enhancements for the read datapath, in accordance with the present disclosure. Here again a 4-tier tDSS 404 provides a storage access point 406 for the clients accessing distributed storage (behind depicted storage access point) via one or more of the conventional storage APIs: block, file and/or object-level (e.g., storage API 402). Initially, I/O request to read data (denoted as 'read(data)') and its directly or indirectly associated SLA descriptor is received via the tDSS 404 storage access point 406 (FIG. 5).

Addresses of the stored copies of data are obtained in one of the conventional ways (those skilled in the art will notice that this step is typically executed by first reading and processing the corresponding metadata, via a DSS-specific implementation of Metadata Service). Those addresses (of the copies of data) will specify locations of each copy of data in the storage tiers T1, T2, T3, and T4, in terms of the server IDs (for the servers in the corresponding storage tier that store parts or all of the requested data), followed typically by a within-server addresses, including local disks and logical block addresses (LBA) on those disks.

FIG. 5 shows the 4-tuples 507 (T1, server11, disk11, slice11) and (T1, server12, disk12, slice12) to indicate that the first copy at least partially resides on the servers server11 and server12 of tier T1. The corresponding disk and block addresses are also depicted.

Next, for each stored copy of data, this implementation executes MATCH() function 508 to select the corresponding CoS tier(s), as well as the CoS-associated concrete reading mechanism(s). In an exemplary implementation, the MATCH() function takes the following arguments:

i) SLA-s associated with the I/O request
ii) request type (read, write);
iii) list of stored copies, in terms of (index, tier) tuples, where index is the number of the copy, and tier is the storage tier that currently stores this copy.

Further, the MATCH() function returns the list of tiers 509 filtered with respect to the provided SLA and its other arguments listed above. In the exemplary implementation the actual data-reading logic is optimized for the corresponding classes of storage. In accordance with the present disclosure, each class of storage can optionally provide a mapping to an alternative reading mechanism with respect to synchronicity (synchronous vs. asynchronous read), caching in the server's memory (don't cache, cache-and-hold, etc.), seek-optimizing I/O scheduling (or lack of thereof in case for non-rotating media), and other known in the art I/O pipeline variations.

Specifically in this case, the MATCH() function returns three lower tiers out of the four tDSS tiers, and their corresponding classes of storage; as a footnote, one typical use case for the primary tier T1 to get filtered out would be cost of storage on a per gigabyte basis. Further, the MATCH-ed class of storage labels are each associated with a per-CoS optimized reading method, as shown on FIG. 5:

$$CoS_2 => read2(), CoS_3 => read3(), CoS_4 => read4()$$

Next, prior to executing the data read itself, the implementation executes the COST() function 511, to further narrow down the list of possible reading destinations based on the estimated "cost" of performing the reading operation. In an exemplary implementation, the COST() function takes the following arguments:

i) SLA-d part of the service-level agreement, explicitly or implicitly associated with this I/O request;
ii) a request type (read, write);
iii) size of the data
iv) distribution of the data - numbers of servers that contain parts of the data and must be accessed to read the full copy, on a per-tier basis
v) destination storage tiers (resulted from the previous MATCH-ing);
vi) a reference to the tDSS monitoring facility that maintains operating statistics for the tDSS and its storage servers;
vii) a reference to the tDSS configuration repository (owned by SMS) that contains the low and high thresholds for the various classes of storage.

Based on this input, the COST() function selects the best matching tiers with respect to the collected runtime statistics; in addition it generates pipeline-modifiers to be further utilized by the specific read() implementations to adjust their I/O processing stages on the fly or in real-time. In the implementation illustrated by FIG. 5, tier T4 from the list 509 is effectively filtered out by the COST() function - one common reason for this would be that some or all of the tier's utilization parameters are above a specified per-statistics high-watermark threshold. On FIG. 5, the cost to execute I/O using tier T4 is much greater than the costs computed for T2 and T3:

COST(T4) >> COST(T2)
COST(T4) >> COST(T3)

Thus, COST() function narrows down the MATCH-ing tiers to T2 and T3 (512), to execute the read request. Tier T2 is then read via its $CoS_2$ associated read2() routine asynchronously (513), while T3 synchronously (514), via the read implementation logic denoted as read3().

Those skilled in the art will appreciate that seemingly redundant reading may be designated to a) perform data prefetch for those workloads that exhibit a good degree of spatial and/or temporal locality, and b) increase the probability to execute the I/O within the specified performance boundaries. Note also that in both cases, the respective read() implementations receive pipeline-modifiers descriptors computed by the COST() function, to further optimize their I/O processing at runtime. In certain implementations, the corresponding optimization includes selecting the least loaded servers that store the copies, in presence of alternatives and assuming the rest SLA-required operational parameters are within their prescribed boundaries (thresholds) as described further herein.

Finally, the first received (that is: good, validated) copy of data is returned to the requesting client, back via the storage access point.

*Reed-Solomon encoding*

In modern storage systems data redundancy and protection is often realized using erasure encoding techniques that take their root in the Reed-Solomon codes developed in the 1960. The corresponding art, prior to storing a data on distributed stable storage, divides the original data into m slices (m >= 1), transforms those m slices into (m + k) coded slices (k >= 1), and then stores the full amount of (m+k) coded slices onto (m+k) storage servers - one coded slice per each of the (m+k) servers. The art of erasure coding defines how to encode the data into the collection of (m+k) servers such that upon failure of any k servers the original data can be recovered from the remaining m servers.

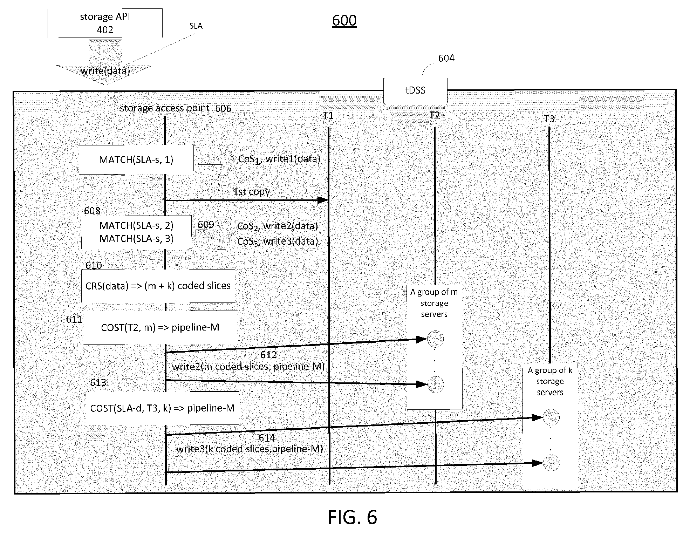

FIG. 6 shows an exemplary sequence diagram 600 of an implementation whereby the first copy of data is MATCH-ed, based on user-supplied SLA, to the tier T1 of the tDSS 604 via storage access point 606, and is then stored using writing mechanism associated with the corresponding class of storage. The system then calculates MATCH() function two times, for the 2nd and 3rd copy of the data (608). As per FIG. 6 example, MATCH() function returns $CoS_2$ and $CoS_3$, respectively (609).

Next, instead of, as disclosed above, storing the 2nd and 3rd copies of the data on the corresponding storage tiers T2 and T3, this implementation performs a Cauchy Reed-Solomon (CRS) transformation 610: namely, for a pre-configured pair (m, k) the original data is transformed into (m+k) coded slices (often also called "slices" or "chunks"). Out of this plurality of (m+k) coded slices, an arbitrary set of m blocks is sufficient to compute the original data, which also means that if all coded slices are stored on different storage servers, the system may tolerate a simultaneous failure of k servers.

Further, COST() function 611 is then invoked, to select m least loaded servers of the tier T2. In an exemplary implementation the COST() function takes the following arguments:

    i) SLA-s part of the service-level agreement;
    ii) a request type (read, write);
    iii) size of the coded slice
    iv) number of storage servers (m, in this case)
    v) destination storage tier, as per the previously executed MATCH() (T2, in this case);
    viii) a reference to the tDSS monitoring facility that maintains various operating statistics for the tDSS and its storage tiers;
    ix) a reference to the tDSS configuration repository (perhaps SMS) that contains the low and high thresholds for the various classes of storage.

The first m coded slices are then stored on the selected m storage servers of tier T2 (612) using CoS-associated write2() routine. Finally, COST() function 613 is used to again, to select this time k least loaded servers of tier T3; the remaining (and redundant) k coded slices are then written onto the selected T3 servers using write3() method 614 associated with the corresponding $CoS_3$ label (of the T3).

For the cases where m > 1 and k < m this implementation will provide a better data availability and better space utilization than the implementation illustrated in FIG. 4 above (that is, simply storing two original copies in tiers T2 and T3), at the relative price of increased read latency to recreate the original data from the coded slices. There are of course multiple variations of the steps described herein, the variations including (but not limited to): whether to erasure encode the data inline or offline, multiple ways to distribute the (m+k) coded slices among tDSS tiers and its storage servers.

For instance, instead of storing m slices on T2 and k remaining slices on T3, the implementation could store m+1 slices on T2 and k-1 slices on T3 (where k >1), thus increasing the fault tolerance of the T2 to withstand a loss of one T2 server, as far as original user data is concerned.

In all cases and for all variations though the MATCH() and COST() functions are used to match service-level agreements to the storage tiers on one hand, and to optimize the I/O processing based on user or application- and storage-specific measurable parameters, including resource utilization and I/O performance.

In this and other implementations, numerous concrete details are set forth to provide a more thorough understanding of the invention. However, it must be apparent to one of ordinary skill in the art that the invention may be practiced without those specific details.

*Write method*

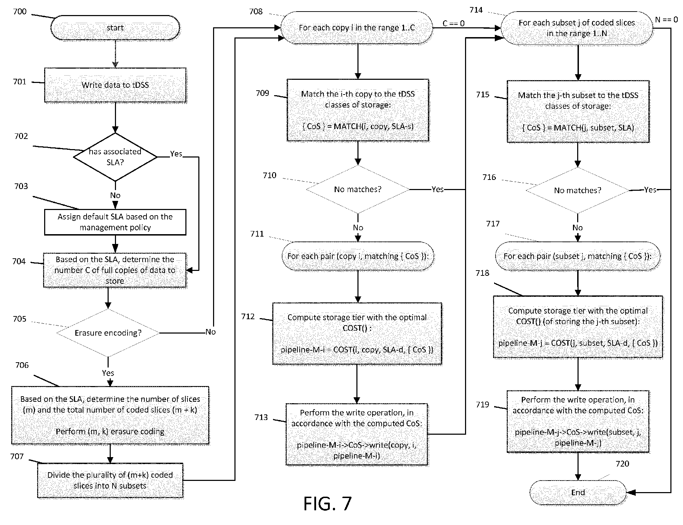

FIG. 7 is a flow chart of an exemplary method of performing a data write request. In the implementation, method 701 of FIG. 7 implements MATCH() and COST() functions that are invoked for an I/O request. First, request to write data is obtained via tDSS-provided storage access point (block 701), via one of the conventional storage APIs: block, file or object. Per blocks 702 and 703, a service-level agreement (SLA) label may either be extracted directly from the data write request, or associated with it based on the management policies and/or system defaults. Per block 704 through 706, the service label is further used to determine the number of full copies (replicas) of data to store, and/or the number of erasure encoded slices of the latter (the exemplary implementation uses well-known Cauchy Reed-Solomon (CRS) encoding).

Per block 707, the plurality of (m, k) coded slices is subdivided further into a plurality of subsets of coded slices, to store each subset in one of the storage tiers. In accordance with an implementation of the application, the sum (or, union) of all subsets includes each one of the (m + k) erasure coded slices at least once, possibly with repetitions (the simplest variation of the above is, of course, a single set of the original (m+k) coded slices). This step, as well as the 706 encoding, is performed only if erasure encoding is configured - otherwise, the execution continues from block 708.

If, as previously determined through block 704, there's at least one full copy of data to be stored in the tDSS, the execution then continues from block 708, otherwise it proceeds to block 714. Further, blocks 709 through 713 constitute the loop 708 - the set of instructions executed on a per copy of data basis. Block 709 performs that MATCH() function for each copy of data, with arguments of the function including:

i) SLA-s associated with the I/O request;
ii) a request type (read, write);
iii) a type of content to write (full copy, set of coded slices);
iv) number or index of the copy (1, 2, 3, ...);
v) size of the data that must be stored

Based on this input, MATCH() function computes matching classes of storage - a subset of { CoS } defined for the tDSS tiers; if there are no matches, the execution skips to 714.

Further, for each i-th full copy (where 1 <= i <= C, as per 708) and its matching classes of storage 711, COST() function is called. In the exemplary implementation, COST() function takes the following arguments:

i) SLA-d associated with this I/O request;
ii) a request type (read, write);
iii) number or index of the copy (1, 2, 3, ...);
iv) destination storage tiers (resulted from the previous MATCH-ing 709);
v) size of the data
vi) a reference to the tDSS monitoring facility that maintains various operating statistics for the tDSS and its storage tiers (not shown on the FIG. 7);
vii) a reference to the tDSS configuration repository (perhaps SMS) that contains the low and high thresholds for the various classes of storage (not shown on the FIG. 7).

Given that input, COST() function computes the best matching tier and the minimal "cost" formalized in the implementation as a list of name/value pairs ("pipeline-modifiers"); the function then returns the best estimated "cost" (of storing the i-th copy of data) and, as part of the latter, its associated CoS (712).

At this point, what remains is to perform an actual write operation. As stated, the implementation enhances existing art, that is, the essential capability of conventional distributed storage systems to read and write data. Per block 713, the previously computed pipeline-modifiers-i (712) references the computed class of storage (notation pipeline-modifiers-i->CoS); the latter in turn is associated with a write() method optimized to write data onto the corresponding storage media.

Finally in that sequence of references, the corresponding write() routine is invoked; notice that the pipeline-modifiers-i (712) is passed on to the write method as one of its arguments, to provide the writing logic with additional information that is used in the implementations to further optimize I/O pipeline as disclosed herein. Blocks 712 and 713 are iterated within the loop 711 until there are no more pairs (i-th copy of data, set of matching CoS).

Notation CoS->write() indicates the write() method that is tuned up specifically for its associated class of storage. In the exemplary implementation, for instance, writing to primary tier is done synchronously, while writing to lower tiers may be asynchronous (FIG. 4, FIG. 6). In other implementations, the I/O pipeline is modified to either:

1) skip certain pipeline stages (in particular, compression and/or deduplication);

2) perform those pipeline stages at a certain probability derived from the pipeline-modifiers' reflected "cost" at a given moment of time (712);

3) or alternatively, perform those stages using CoS-optimized conventional algorithms.

Further, the process of writing to non-persistent storage tiers consists in updating internal index that references the in-memory content. Those skilled in the art will appreciate that the corresponding modifications to an existing DSS I/O implementation do not introduce additional complexity as far as existing structure of its metadata and its (metadata's) integrity.

Finally, steps 714 through 719 execute a very similar procedure of writing erasure encoded slices onto matching tDSS tiers. Blocks 715 through 719 are executed for each subset of coded slices within the 714 loop. Here again, given the user SLA, for each subset of coded slices (and its index j in the 714 sequence) we first compute matching classes. In presence of matches 716 the block 718 computes the optimal (with respect to the tiers' utilization and in accordance with the user SLA, as already described herein) pipeline-modifiers and its corresponding class of storage (pipeline-modifiers-j->CoS). Finally, the coded slices are written onto the computed storage tier 719 using the write() routine that is specifically tuned up for its associated class of storage. Blocks 718 and 719 are iterated within the nested loop 717 until there are no more pairs (j-th subset of coded slices, set of matching CoS).

*COST() function: performance statistics, thresholds and weights*

*COST() implementations*

In an exemplary implementation, the following performance statistics are tracked for each storage server: used and free space (statistic S1 u and S1 f, respectively); current and a moving average of server utilization (statistic S2c and S2a, respectively); current and moving average of CPU utilization (statistic S3c and S3a, respectively), current and moving average of the server's end-to-end read latency (statistics S4cr and S4ar, respectively), and finally, current and moving average of the server's end-to-end write latency (statistics S4cw and S4aw, respectively).

Statistics S1 u and S1f are henceforth collectively denoted as S1*; the same convention holds for the rest statistics described herein.

Statistics S1* and S4* are measured at the storage server level, S2*-averaged over the server's (directly or indirectly) attached disks - if and only if the corresponding tier utilizes the server's persistent storage; otherwise, the exemplary implementation sets S2* statistics to zero. (Those skilled in the art will recognize that the latter is due to the fact that for the modern DRAM technology the circumstances the memory itself becomes a bottleneck are extremely unlikely; on the other hand, the S1* statistics are important and are tracked for RAM based tiers as well.)

*Moving averages*

In an exemplary implementation, moving averages for server utilizations and latencies are computed as follows. Let X be the current moving average, and x be the value of the corresponding statistics measured during the most recent cycle (a.k.a epoch) of measuring the corresponding statistics. Then the recomputed new average X will be:

$$X = alpha * x + (1 - alpha) * X,$$

where 0.1 < alpha < 1

In other words, the implementations continuously compute and adjust moving averages based on the most recent value of the corresponding statistics. The 'alpha' (above) reflects a bias to consider the most recent value more (or less) important than the accumulated history. In one implementation, the value of alpha is set to 0.6.

Further, all the collected statistics (above) are aggregated for storage tiers (or, same - for the corresponding classes of storage) as known functions of the corresponding values of storage servers. For instance, S1 u (used space) for a class of storage is a sum of all S1 u counters of the storage servers that comprise the corresponding storage tier, whereas S2c (current disk utilization) is an average function of the S2c values for the servers in the tier (note that the maximum function may also be a good choice in other implementations, depending on the storage tier organization and the optimization goals pursued by the system designer).

In this exemplary implementation, the following thresholds are stored and used to implement the COST() function: high and low watermarks for the percentage of used space (parameters HS1 and LS1, respectively); high and low watermarks for disk utilization (parameters HS2 and LS2, respectively); high and low watermarks for CPU utilization (parameters HS3 and LS3, respectively); high and low watermarks for the end-to-end read latency (HS4r and LS4r);

high and low watermarks for the end-to-end write latency (HS4w and LS4w).

Further, parameters include weights W1, W2, W3, W4r and W4w that may be used in the implementations to implement the COST() function. In one implementation, the COST function implements the following pseudo-coded sequence:

```
cost = 0;
for each statistics s (S1* through S4*) {
   if (low-wm <= s <= high-wm) // in the range between watermarks
       normalized-s = (s - low-wm) * 100 / (high-wm - low-wm);
       cost += weight-s * normalized-s;
   else if (s > high-wm) // above high watermark
       return MAX_UINT64;
}
```

return cost;

The rationale behind this particular implementation is as follows. For a statistic that is below its predefined low-watermark threshold, we assume its contribution to an aggregated cost as zero. Otherwise, if the statistic falls into the corresponding low/high interval, we first normalize it as a percentage of this interval and add the result to the cost using its corresponding weight, one of W1 through W4w (above).

Notice that if the statistic measures above its configured high watermark, the COST function in this implementation returns, effectively, maximum 64-bit value which is further interpreted as "infinite" aka "prohibitive" as far as using the corresponding storage tier for *this* I/O request.

There are multiple implementations of the COST() function over the S1* through S4*, and similar. In other implementations, the matching (that is, computed by the MATCH() function - see FIG. 7) tiers are sorted based their respective collected values for those statistics. This results in 10 sorted lists for each of the 10 statistics listed above. At this point, again, the lists are filtered with respect to the high watermarks (if present), and the points are then assigned based on the first-second-third places of the respective tiers - the "winning" tier will get the maximum number of points and will be used to perform the I/O operation. Yet another implementation uses known I/O load adaptive balancing art to correlate collected statistic counters to the optimal execution; the letter known in the art adaptive hysteresis schemes (to smooth out short-lived fluctuations) as well as positive/negative feedback to re-compute the weights W1 through W4w on the fly, thus adjusting the ranking order and priority of the collected statistics as far as computed aggregated cost.

In yet other implementations, the COST() function is implemented to specifically control ratios of I/Os routed between the tDSS tiers. For instance, in a two-tier configuration the 50/50% ratio would effectively translate as a COST() function returning "infinite" and 0 (zero) for those two tiers in a round-robin fashion. This approach immediately extends to any finite set of percentages (with a 100% sum) that would control utilization of the same number of tDSS tiers.

To illustrate it further, consider the S4 (latency) statistic, or more exactly it's per-tier measured moving averages S4ar and S4aw for reads and writes, respectively. Following is a pseudo-coded example for two tiers, T1 and T2:

```
ratio = 2; // #1
if (S4(T2) > 10 * S4(T1)) {ratio *= 2;} // #2
else if (S4(T2) < 2 * S4(T1)) {ratio = max(ratio/2, 1);} // #3
```

In the first line (#1 above) we initialize the 'ratio' variable that controls usage of the tiers T1 and T2 on a per I/O basis. For any given computed ratio, the percentage of I/Os that utilize tier T1 is calculated as follows:

```
percentage = 100 * (ratio - 1) /ratio;
```

Thus, setting initial value equal 2 yields exactly 50/50% for the tiers T1 and T2.

The second line (#2 above) doubles the percentage of I/Os routed to T1 - if and only if the T2 latency is at least 10 times greater than the T1's. Finally, the line #3 adjusts percentage of T1-utilizing I/Os back in favor of T2 if the latency of the latter falls below 2x of the T1's.

Those skilled in the art will notice that this ratio-based approach is immediately extensible to support:

- any number of storage tiers, and
- any subset, or the entire set, of measured statistics
- and, finally, to accommodate and leverage known adaptive load balancing techniques, such as adaptive hysteresis, exponential or linear backoff, re-active and proactive performance management, and others.

Examples of the latter include well-known TCP congestion control and congestion-avoidance algorithms such as Reno, New Reno and Vegas. TCP Vegas, for instance, teaches to estimate expected I/O performance based on the measured latency:

expected-throughput = pending-workload/latency;

where the 'pending-workload' is the size of the queue (in bytes) at the storage access point (FIG. 4, FIG. 5, FIG. 6) and latency is one of the S4 statistics (above). The computed 'expected-throughput" is then compared with an actual throughput to compute the corresponding COST().

For a 3-tier tDSS, for instance, a set of percentage values (p1, p2, p3) where p1 + p2 + p3 = 100% would correspond to the following possible pseudo-coded implementation of the COST() function - one of the several other possible implementations:

```
r = rand(100);
if (r < p1) {return T1;}
else if (r < p1 + p2) {return T2;}
else {return T3;}
```

(In the code above, the {return Ti;} statement is simplified for shortness sake, to indicate "infinite" cost for tiers other than the Ti)

Further, in the exemplary implementation, all the collected statistics, as well as the aggregated computed cost are included in a pipeline-modifiers; the latter is then passed on into the read() and write() implementations as illustrated in FIG. 4, FIG. 5, FIG. 6, FIG. 7 and the corresponding detailed description above.

Note that the system may automatically assign default values to the threshold and weighting parameters, and therefore a storage management system (SMS) driven configuration may be optional. The SMS may also vary the parameters dynamically in order to achieve the desired ranges or component utilization. A particular implementation of the system described in the present application is not required to use all the parameters described above, or may use additional parameters that suitably describe the specific storage tiers and subsystems.

Further, for any given tier returned by the COST() function, the resulting pipeline-modifiers include, as the name implies, parameters that define or hint on how to execute specific I/O pipeline stages, including checksumming, inline compression, inline encryption, inline deduplication, data distribution (dispersion), read caching and writeback caching. One of the examples above reflects a rather straightforward tradeoff for the inline deduplication, as far as CPU utilization (to compute cryptographically secure fingerprints for the deduplicated data, for instance) on one hand, size of the dedup index on another, and available storage capacity, on the third hand. Similarly, for inline compression the formula must include the tradeoff between CPU and I/O subsystem utilizations, and whether this tradeoff is warranted by the achieved compression ratio, for instance:

```
use_compression = CPU-utilization < threshold1
            &&
            current-compression-ratio > threshold2;
```

In the implementations, this is further extended to include adaptive hysteresis (e.g., the formula above must return true a certain number of times in a row, to smooth out short-lived fluctuations) as well as with respect to current and moving averages of I/O subsystem utilization (statistic S2c and S2 herein), at least for the tiers that are based on persistent storage. For DRAM and SSD based tiers (especially for DRAM) the incentive to compress and/or dedup data inline will typically be rather strong, which is exactly why the implementations implement COST() function on a per class of (the MATCH-ing) storage basis - each instance of computed pipeline-modifiers references specific class of storage (denoted herein as pipeline-modifiers->CoS), whereby the latter in turn references CoS specific (CoS-optimized) read() and write() implementations.

In general, the rationale to task the COST() function to optimize I/O pipelines is directly based on the fact that the COST() is already working with collected utilization and performance statistics S1* through S4* to select destination storage tier(s) as described herein. In the implementations, I/O pipeline optimizing algorithms use the same information that is already used to select the least "costly" storage tier.

*Read method*

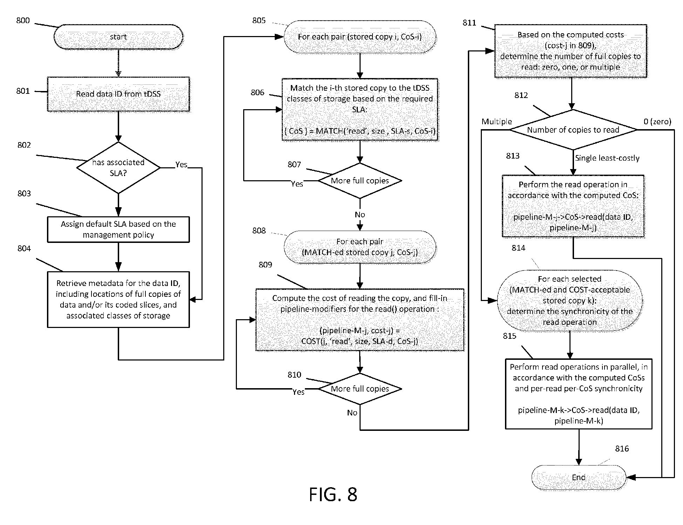

FIG. 8 is a flow chart of an exemplary method of performing a data read request. First, request to read data is obtained via tDSS-provided storage access point (block 801), via one of the conventional storage APIs: block, file or object. Data ID here indicates API-specific identifier that unambiguously tells the system which data is to be read. Per blocks 802 and 803, a service-level agreement (SLA) label is either extracted directly from the data read request, or associated with it based on the management policies and/or system defaults. Per block 804, API-specific identifier of the data that must be read (denoted as ID in the block 801) is used to retrieve the corresponding metadata from the Metadata Service (FIG. 1, FIG. 2); the latter is then used to determine locations of full copies (if any) and/or coded slices of the data.

Rest of the FIG. 8 depicts the processing to retrieve a full copy (or copies) of stored data - this will enable one of ordinary skill in the art to implement reading logic of erasure encoded slices based on the documented implementations and descriptions for the FIG. 6 and FIG. 7, and the FIG. 8 itself, and the other implementation described herein. Per block 805, for each metadata-defined stored copy of data and its class of storage (part of the stored metadata in the exemplary implementation), MATCH() function is executed (block 806) with the following arguments:

i) request type (read, in this case);
ii) size of the data;
iii) SLA-s associated with the I/O request;
iv) Class of storage of this copy of data

Based on this input, MATCH() function computes classes of storage - a subset of classes of storage defined for the tDSS tiers. In the exemplary implementation, the MATCH() is considered to succeed if and only if those computed classes of storage contain the class of storage of the stored copy of data itself - the argument (iv) above. If this is not true (for instance, if MATCH() returns an empty set {}), the corresponding copy is not being used to read the data.

As a side note, the sequence outlined above provides for a designed-in capability to support any variety of service levels based on the same identical, stored and replicated content. For instance, given two copies of data stored on T1 and T2 respectively, a copy that is stored on the primary tear will be read and returned only at (or beyond) a given level of service (denoted as SLA-s in this disclosure).

Next, per block 808 for each successfully MATCH-ed pair:
(copy of data, its class of storage tier that stores this copy)
block 809 gets executed, to compute the cost of reading this particular copy, and secondly, to fill-in pipeline-modifiers for the subsequent (this) CoS-specific read() operation:
(pipeline-M-j, cost-j) = COST(j, 'read', size, SLA-d, CoS-j)

In the exemplary implementation, COST() function takes the following arguments:

i) number or index of the copy (1, 2, 3, ...);
ii) request type (read, in this case);
iii) size of the data to read;
iv) SLA-d associated with this I/O request;
v) destination storage tiers (that stores this copy);
vi) a reference to the tDSS monitoring facility that maintains various operating statistics for the tDSS and its storage tiers (not shown on the FIG. 8);
vii) a reference to the tDSS configuration repository (perhaps SMS) that contains the low and high thresholds for the various classes of storage (not shown on the FIG. 8).

Block 811 aggregates the processing performed by block 809, in terms of the number of full copies to read: zero, one, or multiple. If the loop 808 (and its blocks 809 and 810) produces empty result (which is possible, for instance, when the preceding MATCH() 806 fails for all stored copies), or if for all the computed costs, the following is true: cost-j == MAX_UINT64 (that is, "infinite cost"), read() operation effectively fails and the execution proceeds to the block 816 (end), to either reschedule the read, or fail it all the way to the user or application.

Otherwise, the results are first sorted in the ascending order of computed costs (denoted as cost-j in the block 809). If there's a single result, the execution proceeds to block 813, to ultimately read the data (identified by its API-specific ID) and return the read copy to the user or application via block 816. Finally, blocks 814 and 815 process multiple reading alternatives. In the exemplary implementation, the selection criteria includes a configurable interval (in percentage points) for the computed cost to differ from the minimal cost; all the rest entries in the sorted array (of costs, above) are effectively filtered out.

For the remaining entries (in the cost-sorted array), block 814 further determines the synchronicity of the corresponding subsequent read operations. In the exemplary implementations, the copy that has an associated minimal cost is read synchronously, while all the rest copies - asynchronously, and in parallel (block 815). The latter allows to warm-up the caches on those other tiers (thus effectively minimizing the costs of subsequent reads) while simultaneously providing an additional guarantee that the read() is executed within SLA-defined boundaries even in the unlikely event of the first read() failure. The "price" of those duplicate asynchronous reads is mitigated by the capability to cancel them out in-flight if the corresponding results are not yet (or not yet fully) posted on the network connecting tDSS tiers and storage access point. Notice that block 815 executes the per-CoS defined read operation (denoted as pipeline-M-k->CoS->read()) that is specifically tuned-up for the corresponding storage tier. Similarly to write() processing described herein, COST-computed set of pipeline-modifiers (block 809) is passed over to the read() implementation itself, to further optimize and on-the-fly adapt its processing. Specifically, an exemplary implementation may skip decompression of a compressed copy if CPU utilization for the tier (statistic S3c and S3a in the pipeline-modifiers denoted as pipeline-M-k, block 815) are above the corresponding high watermark, delegating the latter to the tDSS host that implements storage access point.

In the FIG. 8 implementation and other implementations described herein, numerous concrete details are set forth to provide a better understanding of the invention. The invention may be practiced without those specific details. Those skilled in the art will also notice that the methods of this invention can be "recursively" applied to adaptively load balance I/O workload between storage servers within a tier, and between locally attached tiers of each given storage server.

This application discloses various implementations of systems, methods, and devices that enable reading data from or writing data to distributed storage systems. The following enumerated implementations are exemplary of some of the implementations described in this application:

1. An implementation of a system comprising:

a processor;
a distributed storage system including a plurality of storage tiers, each storage tier including a plurality of storage servers; and
an electronic storage medium containing program instructions executable on the processor for:

associating a service level rule with a service requester;
measuring operational parameters associated with writing data to each storage tier of the plurality of storage tiers;
receiving a request to write a data set as part of an input/output operation from the service requester;
writing a first portion of the data set to one or more storage servers associated with a first storage tier based on the service level rule associated with the requester and the measured operational parameters associated with the first storage tier.

2. A further implementation of implementation 1, wherein the processor writes a second portion of the first data set to one or more storage servers associated with a second storage tier based on the service level rule associated with the requester and the measured operational parameters associated with the second storage tier.

3. A further implementation of implementation 1, wherein the processor, during writing, performs erasure encoding of the first portion of the data set to a plurality of storage servers associated with one or more storage tiers based on the service level rule associated with the requester and the measured operational parameters associated with the one or more storage tiers.

4. A further implementation of implementation 1, wherein the processor writes a copy of the first portion of the data set to one or more storage servers associated with a second storage tier based on the service level rule associated with the requester and the measured operational parameters associated with the second storage tier.

5. A further implementation of any one of implementations 1-4, wherein the service requester includes one of a user and an application.

6. A further implementation of any one of implementations 1-5, wherein the service level rule is based on a service level agreement (SLA).

7. A further implementation of implementation 6, wherein the SLA includes at least one of a static rule and a dynamic rule.

8. A further implementation of implementations 7, wherein the static rule includes an administrative requirement.

9. A further implementation of implementations 7, wherein the dynamic rule includes a probabilistic requirement.

10. A further implementation of any one of implementations 1-9, wherein the service level rule is based at least in part on maximum allowable I/O latency, minimum allowable storage capacity, maximum allowable cost of storage, minimum allowable sequential throughput, minimum allowable random throughput, minimum allowable sequential IOPS, minimum allowable random IOPS, storage location, and class of storage (CoS).

11. A further implementation of any one of implementations 1-10, wherein each storage tier of the plurality of storage tiers is associated with a class of storage (CoS) descriptor.

12. A further implementation of implementation 11, wherein the CoS descriptor includes at least one of a read function pointer to read from an associated storage tier and write function pointer to write to an associated storage tier.

13. A further implementation of any one of implementations 1-12, wherein measuring includes a statistical measure over a period of time.

14. A further implementation of any one of implementations 1-13, wherein the first storage tier is at least one of a persistent storage tier and a non-persistent storage tier.

15. A further implementation of any one of implementations 1-14, wherein the processor measures the operational parameters of the first storage tier during writing to the first storage tier.

16. A further implementation of implementation 15, wherein the processor dynamically determines, based on the measured operational parameters, which storage tier of the plurality of storage tiers to write other portions of the data set.

17. A further implementation of any one of implementations 1-16, wherein each of the plurality of storage tiers is determined based on requirements including price, performance, capacity, and function.

18. A further implementation of any one of implementations 1-17, wherein the processor associates each storage tier of the plurality of storage tiers with a class of storage, wherein each class of storage is associated with data access mechanisms used to write data to each of a plurality of storage disks.

19. A further implementation of any one of implementations 1-18, wherein the processor executes a match function to map each of a plurality of service level rules to one or more of a plurality of a class of storage (CoS) labels, the match function determining that the first storage tier satisfies the service level rule based on a CoS label associated with the first storage tier.

20. A further implementation of implementation 19, wherein the processor executes a cost function to determine the cost of executing an I/O request on at least one of the first storage tier and a storage server of the first storage tier.

21. A further implementation of any one of implementations 1-20, wherein the writing includes at least one of synchronous writing and asynchronous writing.

22. A further implementation of implementation 21, wherein asynchronous writing includes scheduling when a writing of the first portion of the data to the first storage tier or another storage tier will occur.

23. An implementation of a method for writing data to a distributed storage system including a plurality of storage tiers comprising:

> associating each storage tier of the plurality of storage tiers with a plurality of storage servers;
> associating a service level rule with a service requester;
> measuring operational parameters associated with writing data to each storage tier of the plurality of storage tiers;
> receiving a request to write a data set as part of an input/output operation from the service requester;
> writing a first portion of the data set to one or more storage servers associated with a first storage tier based on the service level rule associated with the requester and the measured operational parameters associated with the first storage tier.

24. An implementation of a system comprising:

a processor;

a distributed storage system including a plurality of storage tiers, each storage tier including a plurality of storage servers;; and

an electronic storage medium containing program instructions executable on the processor for:

associating a service level rule with a service requester;

measuring operational parameters associated with reading data from each storage tier of the plurality of storage tiers;

receiving a request from the service requester for a data set as part of an input/output operation from the service requester;

reading a first portion of the data set from one or more storage servers associated with a first storage tier based on the service level rule associated with the requester and the measured operational parameters associated with the first storage tier.

25. A further implementation of implementation 24, wherein the processor reads a second portion of the data set from one or more storage servers associated with a second storage tier based on the service level rule associated with the requester and the measured operational parameters associated with the second storage tier.

26. An implementation of a method for reading data from a distributed storage system including a plurality of storage tiers comprising:

associating each storage tier of the plurality of storage tiers with a plurality of storage servers;

associating a service level rule with a service requester;

measuring operational parameters associated with reading data from each storage tier of the plurality of storage tiers;

receiving a request for a data set as part of an input/output operation from the service requester;

reading a first portion of the data set from one or more storage servers associated with a first storage tier based on the service level rule associated with the requester and the measured operational parameters associated with the first storage tier.

27. A further implementation of implementation 26, comprising reading a second portion of the data set from one or more storage servers associated with a second storage tier based on the service level rule associated with the requester and the measured operational parameters associated with the second storage tier.

28. A further implementation of any one of implementations 1-27, wherein a read or write occurs simultaneously with respect to a plurality of tiers of the distributed storage system.

*Portion of data set*

The term "portion of data set" refers to the data that user or application is writing to tDSS or reading from tDSS, contiguous segments of this data, and/or derivative data - that is, the data that is computed directly from the user data, e.g. parity segments or erasure coded slices. In the case of XOR-based (as in conventional RAIDs) parity or Reed-Solomon based erasure encoding, user or application data to be stored is broken into slices, further encoded with redundant data pieces, and stored across a set of different locations: disks, storage servers, or multi-server storage tiers. Hence, a portion of the data set refers to user/application data, segments of this data, coded slices of the data, and/or redundant (computed) coded slices or parity segments in any order, sequence, size, form, or arrangement - as per numerous examples and illustrations of the present disclosure.

It will be apparent to those of ordinary skill in the art that certain aspects involved in the operation of the implementations described herein may be embodied in a computer program product that includes a computer usable and/or readable medium.

**Claims**

1.   A method for writing data to a distributed storage system including a plurality of storage tiers comprising:

associating each storage tier of the plurality of storage tiers with a plurality of storage servers;

associating a service level rule with a service requester;

measuring operational parameters associated with writing data to each storage tier of the plurality of storage tiers;
receiving a request to write a data set as part of an input/output operation from the service requester;
writing a first portion of the data set to one or more storage servers associated with a first storage tier based on the service level rule associated with the requester and the measured operational parameters associated with the first storage tier.

2. The method of claim 1, comprising writing a second portion of the first data set to one or more storage servers associated with a second storage tier based on the service level rule associated with the requester and the measured operational parameters associated with the second storage tier.

3. The method of claim 1, comprising performing, during writing, erasure encoding of the first portion of the data set to a plurality of storage servers associated with one or more storage tiers based on the service level rule associated with the requester and the measured operational parameters associated with the one or more storage tiers.

4. The method of claim 1, comprising writing a copy of the first portion of the data set to one or more storage servers associated with a second storage tier based on the service level rule associated with the requester and the measured operational parameters associated with the second storage tier.

5. The method of any one of claims 1 to 4, wherein the service requester includes one of a user and an application.

6. The method of any one of claims 1 to 5, wherein the service level rule is based on a service level agreement (SLA).

7. The method of claim 6, wherein the SLA includes at least one of a static rule and a dynamic rule.

8. The method of claim 7, wherein the static rule includes an administrative requirement.

9. The method of claim 7, wherein the dynamic rule includes a probabilistic requirement.

10. The method of any one of claims 1 to 9, wherein the service level rule is based at least in part on maximum allowable I/O latency, minimum allowable storage capacity, maximum allowable cost of storage, minimum allowable sequential throughput, minimum allowable random throughput, minimum allowable sequential IOPS, minimum allowable random IOPS, storage location, and class of storage (CoS).

11. The method of any one of claims 1 to 10, wherein each storage tier of the plurality of storage tiers is associated with a class of storage (CoS) descriptor.

12. The method of claim 11, wherein the CoS descriptor includes at least one of a read function pointer to read from an associated storage tier and write function pointer to write to an associated storage tier.

13. A system comprising:

a processor;
a distributed storage system including a plurality of storage tiers, each storage tier including a plurality of storage servers; and
an electronic storage medium containing program instructions executable on the processor for performing any one of the methods of claims 1-12.

14. A method for reading data from a distributed storage system including a plurality of storage tiers comprising:

associating each storage tier of the plurality of storage tiers with a plurality of storage servers;
associating a service level rule with a service requester;
measuring operational parameters associated with reading data from each storage tier of the plurality of storage tiers;
receiving a request for a data set as part of an input/output operation from the service requester;
reading a first portion of the data set from one or more storage servers associated with a first storage tier based on the service level rule associated with the requester and the measured operational parameters associated with the first storage tier.

**15.** A system comprising:

a processor;
a distributed storage system including a plurality of storage tiers, each storage tier including a plurality of storage servers; and
an electronic storage medium containing program instructions executable on the processor for performing the method of claim 14.

FIG. 1

200

Client 102    Client 104    Client 106

I/O    I/O    I/O

Data Center Network
118

Metadata Service
108

T1

Storage Server
202  •••  Storage Server
204

T2

Storage Server
206   Storage Server
208  •••  Storage Server
210   Storage Server
212

Other Network
214

T3

Storage Server 216   Storage Server 218   Storage Server 220  •••  Storage Server 222   Storage Server 224   Storage Server 226

FIG. 2

FIG. 3A

FIG. 3B

storage API
402

SLA
403

400

write(data)

404

tDSS

storage access point 406    T1    T2    T3    T4

MATCH(SLA-s, 1)    407    $CoS_1$
COST(SLA-d, T1)

write1(data, pipeline-M)

MATCH(SLA-s, 2)    408    $CoS_2$
COST(SLA-d, T2)

write2(data, pipeline-M)

MATCH(SLA-s, 3)    409    $CoS_3$
COST(SLA-d, T3)

MATCH(SLA-s, 4)    410

write3(data, pipeline-M)    411

412

4th copy, dispatched,
scheduled

FIG. 4

FIG. 5

FIG. 6

FIG. 7

800 — ( **start** )

801 — Read data ID from tDSS

802 — has associated SLA? — Yes

803 — Assign default SLA based on the management policy

804 — Retrieve metadata for the data ID, including locations of full copies of data and/or its coded slices, and associated classes of storage

805 — ( For each pair (stored copy i, CoS-i) )

806 — Match the i-th stored copy to the tDSS classes of storage based on the required SLA:

{ CoS } = MATCH('read', size , SLA-s, CoS-i)

807 — More full copies — Yes / No

808 — ( For each pair (MATCH-ed stored copy j, CoS-j) )

809 — Compute the cost of reading the copy, and fill-in pipeline-modifiers for the read() operation :

(pipeline-M-j, cost-j) = COST(j, 'read', size, SLA-d, CoS-j)

810 — More full copies — Yes / No

811 — Based on the computed costs (cost-j in 809), determine the number of full copies to read: zero, one, or multiple

812 — Number of copies to read — Multiple / 0 (zero) / Single least-costly

813 — Perform the read operation in accordance with the computed CoS:

pipeline-M-j->CoS->read(data ID, pipeline-M-j)

814 — ( For each selected (MATCH-ed and COST-acceptable stored copy k): determine the synchronicity of the read operation )

815 — Perform read operations in parallel, in accordance with the computed CoSs and per-read per-CoS synchronicity

pipeline-M-k->CoS->read(data ID, pipeline-M-k)

816 — ( **End** )

FIG. 8

29

**Europäisches Patentamt**
**European Patent Office**
**Office européen des brevets**

# EUROPEAN SEARCH REPORT

Application Number

EP 14 19 6421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 573 679 A2 (NEXENTA SYSTEMS INC [US]) 27 March 2013 (2013-03-27) * abstract; figures 2,4,5,6,8,9,10 * * paragraphs [0015] - [0018], [0020], [0036], [0039] - [0044], [0046], [0051] - [0054], [0075] - [0076], [0084], [0085], [0088], [0095] - [0116] * | 1-15 | INV. G06F3/06 |
| A | US 2010/122020 A1 (SIKDAR SOM [US] ET AL) 13 May 2010 (2010-05-13) * figures 1,4,5,6,7,14 * | 1-15 | |
| A | US 2002/103969 A1 (KOIZUMI HIROSHI [JP] ET AL) 1 August 2002 (2002-08-01) * abstract * | 1-15 | |

TECHNICAL FIELDS
SEARCHED (IPC)

G06F

The present search report has been drawn up for all claims

| Place of search | Date of completion of the search | Examiner |
|---|---|---|
| The Hague | 13 November 2015 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 14 19 6421

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2015

| Patent document cited in search report | | Publication date | Patent family member(s) | | Publication date |
|---|---|---|---|---|---|
| EP 2573679 | A2 | 27-03-2013 | EP | 2573679 A2 | 27-03-2013 |
| | | | EP | 2793131 A1 | 22-10-2014 |
| | | | EP | 2933725 A1 | 21-10-2015 |
| US 2010122020 | A1 | 13-05-2010 | NONE | | |
| US 2002103969 | A1 | 01-08-2002 | JP | 2002182859 A | 28-06-2002 |
| | | | US | 2002103969 A1 | 01-08-2002 |

EPO FORM P0459

For more details about this annex : see Official Journal of the European Patent Office, No. 12/82